# EUROPEAN PATENT APPLICATION

(11) **EP 1 353 147 A2**
(43) Date of publication of application: **15.10.2003**
(21) Application number: 03252236.9
(22) Date of filing: 09.04.2003
(51) Int. Cl.: G01C 21/32

(54) **Navigation apparatus**

(30) Priority: 10.04.2002 JP 2002108192
(71) Applicant: Pioneer Corporation, Meguro-ku, Tokyo (JP)
(72) Inventor: Yamanaka, Kiyoshi, Pioneer Corporation, Kawagoe-shi, Saitama (JP)
(74) Representative: Haley, Stephen

(57) **Abstract**

The navigation apparatus (7) stores map data (M) used to display map to the user as well as use history information of the map data. The use history information of the map data indicates a Frequency of Use of the map data in the past and so on. When the navigation apparatus (7) need to store new map data during its operation, it detects whether or not unoccupied area is in the storage unit (36). If unoccupied area is present in the storage unit, the new map data can be stored in the unoccupied area. On the contrary, if no unoccupied area is present in the storage unit, the navigation apparatus (7) erases map data in the storage unit to create unoccupied area based on the use history information of the map data. Therefore, new map data may be stored in the unoccupied area thus created. In this way, the navigation apparatus can efficiently use the storage unit having limited storage capacity to store necessary map data.

## Description

This invention belongs to a technical field of a communication-type navigation apparatus, and more particularly to a map data acquiring processing executed during a use of a navigation apparatus.

A known navigation apparatus utilizes map data stored in a map data storage medium such as a CD-ROM (Compact Disc-Read Only Memory) or a DVD-ROM (DVD-Read Only Memory) . Namely, the navigation apparatus includes a drive unit for the map data storage medium such as a CD-ROM or a DVD-ROM, and reads out map data around the current position of the vehicle according to the movement of the vehicle to display the map data on an LCD (Liquid Crystal Display) or the like provided on the vehicle near a driving seat of the vehicle.

However, in case of using such a storage medium as a data supply source of map data, there is a problem that frequently updating the map data is difficult. The map data is updated in accordance with the expansion road network. Also, the map data used by the navigation apparatus includes, in addition to road data, information such as neighboring facilities and/or shops (e.g., road-side shops, gas stations and so on) . Recently, shops open and shut up relatively frequently. A user who always needs new information should frequently buy and change the map data storage medium, and this is burdensome for the user. In addition, a new edition of map data storage medium is put into the market every certain time period, e.g., every 6 months or every year, and hence the user cannot catch up with the on-going real change of the shops or stores even if he or she buys a new edition every time.

Moreover, the functions of the navigation apparatus are recently being improved and sophisticated, and the map data includes more auxiliary data, other than the road data. Hence, the navigation apparatus needs to employ a microprocessor having high-speed processing capability to enable sophisticated route search and/or route guidance. This increases the size and the cost of the navigation apparatus.

In order to overcome the above-mentioned problems, recently a communication-type navigation system has been proposed. In such a communication-type navigation system, a navigation apparatus installed on a vehicle and a map data providing center on a communication network communicate with each other by wireless communication, and map data is downloaded from the map data providing center to the navigation apparatus on the vehicle. The navigation apparatus stores the downloaded map data on an internal storage medium such as a hard disk, and performs map display and/or route guidance by using the stored map data. Examples of such a communication-type navigation apparatus are disclosed in Japanese Patent Applications Laid-Open under No. 7-262495 and No. 10-96644.

In such a communication-type navigation system, by updating the map database on the map data providing center side, a user can always obtain and use newest map data by communication with the map data providing center.

In a communication-type navigation apparatus of the above kind, when the user drives an area which the user has not traveled in past, the navigation apparatus accesses the map data providing center to download the map data of the area and stores it in a storage medium. Therefore, every time when the user drives an unfamiliar area, the amount of the map data stored in the storage medium of the navigation apparatus increases. However, the storage capacity of the storage medium, such as a harddisk, which is provided in the navigation apparatus to store the map data, is limited, and hence when the storage medium is occupied by the stored map data already downloaded, no more new map data cannot be stored therein.

It is an object of the present invention to provide a communication-type navigation apparatus in which map data to be stored therein can be appropriately updated.

According to one aspect of the present invention, there is provided a navigation apparatus including: a storage unit which stores map data and use history information of the map data; a detecting unit for detecting whether or not the storage unit has an unoccupied area when new map data is to be stored; and an erasing unit for erasing the map data in the storage unit to create an unoccupied area based on the use history information when the detecting unit detects that the storage unit does not have the unoccupied area.

The above navigation apparatus stores map data used to display map to the user as well as use history information of the map data. The use history information of the map data indicates a Frequency of Use of the map data in the past, for example. When the navigation apparatus needs to store new map data during its operation, it detects whether or not an unoccupied area is in the storage unit. If unoccupied area is present in the storage unit, the new map data can be stored in the unoccupied area. On the contrary, if no unoccupied area is present in the storage unit, the navigation apparatus erases map data in the storage unit to create unoccupied area based on the use history information of the map data. Therefore, new map data may be stored in the unoccupied area thus created. In this way, the navigation apparatus can efficiently use the storage unit having limited storage capacity to store necessary map data.

The navigation apparatus may further include a communication unit for communicating with a map data providing center to acquire map data when new map data is to be stored; and a storing unit for storing the acquired map data into the unoccupied area created by the erasing unit. By this, a communication-type navigation apparatus can acquire map data as necessary to display map and appropriately update map data to be stored in the storage unit.

In an embodiment, the use history information may include information of Frequency of Use for each predetermined unit of the map data, and the erasing unit may erase the map data which Frequency of Use is low in an order from the map data having lowest Frequency of Use. Since the map data of low Frequency of Use is presumed to be less important, such map data can be erased with high priority to efficiently use the storage capacity of the storage unit.

In another embodiment, the use history information may include information of Last Date and Time of Use for each predetermined unit of the map data, and the erasing unit may erase the map data which Last Date and Time of Use is old in an order from the map data having oldest Last Date and Time of Use. Since the map data which Last Date and Time of Use is old is not recently used, although it was used in the past, such map data can be erased with high priority to efficiently use the storage capacity of the storage unit.

In another embodiment, the use history information may include information of Frequency of Use and information of Last Date and Time of Use for each predetermined unit of the map data, and the erasing unit may erase the map data which satisfies both of, or either one of, a first condition that the Frequency of Use is smaller than a predetermined frequency and a second condition that the Last Date and Time of Use is older than a predetermined period.

The navigation apparatus may further include: a display unit for displaying map by using the map data corresponding to a map display area; and an updating unit for updating the use history information for the map data used by the display unit. Thus, every time when the map data is used for displaying map to the user, the use history information of the map data is updated, and hence the map data can be erased from an appropriate one in an appropriate order based on the updated use history information.

According to another aspect of the present invention, there is provided a computer program executed by a navigation apparatus having a storage unit, the program controls the navigation apparatus to function as: a detecting unit for detecting whether or not the storage unit has an unoccupied area when new map data is to be stored; and an erasing unit for erasing the map data in the storage unit to create an unoccupied area based on the use history information when the detecting unit detects that the storage unit does not have the unoccupied area.

By executing the program by the navigation apparatus, the map data stored in the storage unit can be appropriately updated.

The nature, utility, and further features of this invention will be more clearly apparent from the following detailed description with respect to preferred embodiment of the invention when read in conjunction with the accompanying drawings briefly described below.

In the Drawings;
Fig. 1 is a diagram schematically showing a situation where a communication-type navigation apparatus is used;
Fig. 2 is a block diagram showing a configuration of the communication-type navigation apparatus shown in Fig. 1;
Fig. 3 is a diagram showing a configuration of a system for pre-installing map data to the communication-type navigation apparatus;
Fig. 4 is a diagram schematically showing a manner of dividing a certain geographical area into a plurality of meshes;
Fig. 5A shows an example of data structure of map data (mesh data);
Fig. 5B shows an example of use history data;
Fig. 6 is a flowchart of a map data pre-install process; and
Fig. 7 is a flowchart of a map display process.

In a communication-type navigation apparatus, map data is basically downloaded by data communication. However, at the time of initial setting or the like, relatively large amount of map data should be prepared and installed into the navigation apparatus. If all of the map data is downloaded by data communication at the time of initial setting, the user's burden on the communication cost increases a lot. In this view, according to the present invention, a certain amount of basic map data is installed into the map data storage medium in the navigation apparatus at the time of initial setting or the like (this process will be hereinafter referred to as "pre-install"). After that, when the user drives within an area for which the map data has been already pre-installed, the navigation is executed by using the map data already stored in the storage medium. On the other hand, when the user drives in an area out of the area for which the map data has already been stored, the navigation apparatus connects to the map data providing center to download necessary data according to need. Thus, the navigation can be executed when the user drives a new area. The present invention offers a method of appropriately updating the map data when the storage medium in the navigation apparatus is occupied by the map data thus obtained and stored.

The preferred embodiments of the present invention will now be described below with reference to the attached drawings.

### [Navigation Apparatus]

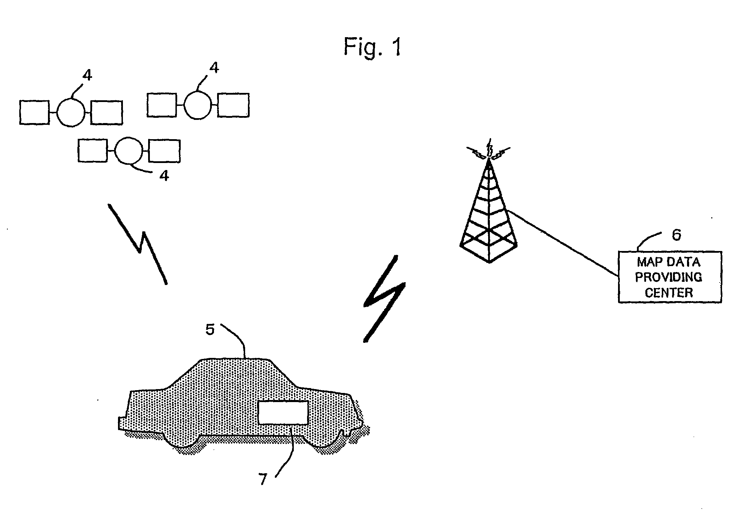

Fig. 1 schematically illustrates a situation in which the navigation apparatus according to the present invention is used. In Fig. 1, the navigation apparatus 7 is installed on the vehicle 5. The navigation apparatus 7 receives radio waves from the plural satellites 4 to measure the position of the vehicle. Also, the navigation apparatus 7 connects to the map data providing center 6 by the communication function to download the map data and stores it in the map data storage unit in the navigation apparatus 7. According to the movement of the vehicle, the navigation apparatus 7 obtains necessary map data from the map data providing center 6 to execute function such as route search and/or route guidance.

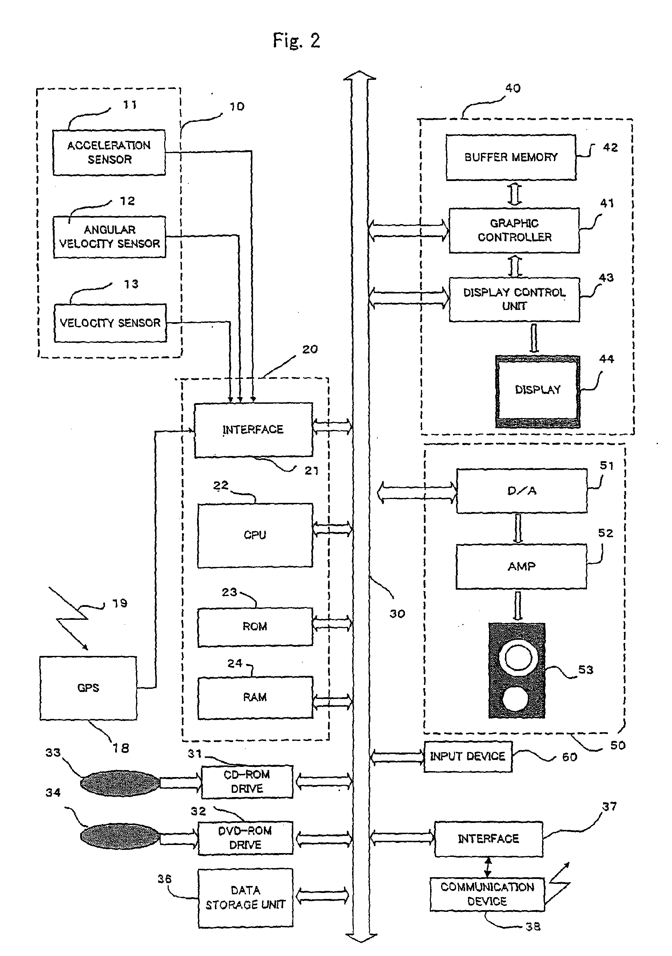

Fig. 2 is a block diagram showing the navigation apparatus 7 according to the embodiment of the present invention.

As shown in Fig. 1, the navigation apparatus 7 according to the present embodiment includes a stand-alone navigation device 10, a GPS receiver 18, a system controller 20, a CD-ROM drive 31, a DVD-ROM drive 32, a data storage unit 36, a communication interface 37, a communication device 38, a display unit 40, a sound output unit 50 and an input device 60.

The stand-alone navigation device 10 includes an acceleration sensor 11, an angular velocity sensor 12 and a velocity sensor 13. The acceleration sensor 11 is formed of, for example, a piezoelectric device, and detects an acceleration of a vehicle and outputs acceleration data. The angular velocity sensor 12 is formed of, for example, a vibration gyroscope, and detects an angular velocity of a vehicle at the time of direction change of the vehicle, and outputs angular velocity data and relative bearing data.

The velocity sensor 13 is formed of a vehicle velocity sensor which detects rotation of an axle of a vehicle mechanically, magnetically or optically, and generates a vehicle velocity pulse which is a pulse signal, for every rotation for a predetermined angle of the axle.

The GPS receiver 18 receives an electric wave 19 carrying downstream line data including data for positioning, from a plurality of GPS satellites to be used for detecting an absolute position of the vehicle according to latitude and longitude information and the like.

The system controller 20 includes an interface 21, a CPU (Central Processing Unit) 22, a ROM (Read Only Memory) 23 and a RAM (Random Access Memory) 24, and is configured to control the entire navigation apparatus 7.

The interface 21 carries out interface operation with the acceleration sensor 11, the angular velocity sensor 12 and the velocity sensor 13 so as to input, to the system controller 20, the acceleration data, the relative bearing data, the angular velocity data, the GPS positioning data, the absolute bearing data and the like in addition to a vehicle velocity pulse. The CPU 22 controls the entire system controller 20. The ROM 23 has a non-volatile memory or the like (not shown) in which control programs or the like for controlling the system controller 20 is stored. The RAM 24 stores various data such as route data entered in advance by a user via the input device 60, in a readable manner, and provides a working area for the CPU 22.

The system controller 20, the CD-ROM drive 31, the DVD-ROM drive 32, the data storage unit 36, the communication interface 37, the display unit 40, the sound output unit 50 and the input device 60 are connected with each other via a bus line 30.

The CD-ROM drive 31 and the DVD-ROM drive 32 read out, under the control of the system controller 20, contents data such as audio data and/or video data, as well as control programs corresponding to the respective embodiments as will be described later, from a CD 33 and a DVD 34, respectively, and output the same. It should be appreciated that the CD-ROM drive 31 and the DVD-ROM drive 32 may be provided solely, or a CD/DVD compatible drive may be provided.

Also, in the present invention, the map data used in the navigation apparatus 7 is basically pre-installed as described later or installed by downloading from the map data providing center 6 via the data communication. However, the navigation apparatus 7 may be configured to use the map data stored in the CD-ROM 33 or DVD-ROM 34. Especially, if the user uses special planning map disc (e.g., a golf course map, a ski area map, a tour plan guide of sightseeing spots, etc.) other than normal road map data, the CD-ROM drive 31 or the DVD-ROM drive 32 may be advantageously used.

The data storage unit 36 mainly stores map data. The map data is basically obtained by the pre-install process described later and is also obtained by downloading from the map data providing center 6 as necessary during the traveling of the vehicle. The map data thus obtained is stored in the data storage unit 36. It is noted that the data storage unit 36 may store audio data and/or video data read out from the CD-ROM drive 31 or the DVD-ROM drive 32, or the map data stored in the special planning map disc described above.

The communication device 38 is implemented by, for example, a cellular phone, and is configured to be able to download, via the communication interface 37 forming a modem or the like, map data from the data providing center 6.

The display unit 40 displays various kinds of display data under the control of the system controller 20. The display unit 40 includes a graphic controller 41 for controlling the entire display unit 40 based on control data sent from the CPU 22 via the bus line 30; a buffer memory 42 formed of a memory such as VRAM (Video RAM) and for temporarily storing image information which is ready for display; a display control unit 43 for controlling a display 44 such as liquid crystal or CRT (Cathode Ray Tube) display based on image data output from the graphic controller 41; and the display 44. The display 44 is implemented by a liquid crystal display or the like having a diagonal length of about 5 to 10 inches, for example, and is mounted in the vicinity of a front panel in a vehicle.

The sound output unit 50 includes a D/A converter 51 for performing D/A (Digital to Analogue) conversion of digital sound data sent from the CD-ROM drive 31 or the DVD-ROM 32, or from the RAM 24 or the like via the bus line 30 under the control of the system controller 20; an amplifier (AMP) 52 for amplifying an analog sound signal output from the D/A converter 51; and a speaker 53 for converting the amplified analog sound signal to sound and outputting the sound to the interior of the vehicle.

The input device 60 is configured by a key, a switch, a button, a remote-controller, a voice input device or the like. The input device 60 is disposed around the front panel of the main body of the navigation apparatus 7 mounted in the vehicle or around the display 44.

### [Pre-Install System]

Next, a pre-install system for pre-installing map data will be described. In the communication-type navigation apparatus 7 according to the present invention, map data is basically obtained from the map data providing center 6 by way of data communication. However, at the time of initial setting of the navigation apparatus 7, map data of certain area that are expected to be frequently used, e.g., near the user's house, are pre-installed. Thus, it is unnecessary to download large amount of map data by data communication when the navigation apparatus is first used.

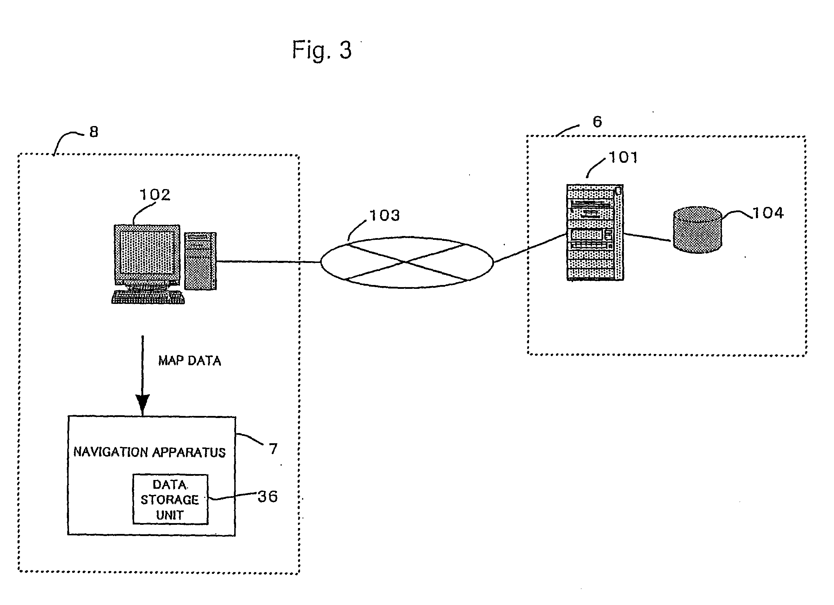

Fig. 3 schematically shows a system for pre-install processing. As shown in Fig. 3, a shop 8 and the map data providing center 6 are connected via a communication network 103. The shop 8 may be, for example, a car dealer or a car shop which deals in navigation apparatuses.

The map data providing center 6 includes a map server 101 and a map database 104. The map database 104 stores map data. The map server 101 obtains necessary map data from the map database 104 upon request from the shop 8, and transmits the map data to the shop 8 via the communication network 103.

In the shop 8, a pre-install terminal 102 is provided. The pre-install terminal 102 sends a request for the map data to be pre-installed to the user's navigation apparatus to the map data providing center 6, receives the map data, and temporarily stores it in an internal memory or the like. Then, the pre-install terminal 102 stores the map data into the data storage unit 36 in the user's navigation apparatus 7.

There are some different methods to transfer the map data from the pre-install terminal 102 to the data storage unit 36 of the navigation apparatus 7. One method is that the pre-install terminal 102 temporarily stores the map data onto a storage medium such as a DVD-RAM, a semi-conductor memory, a card-type storage medium or the like, and the storage medium is inserted into the drive unit of the navigation apparatus 7 so that the map data is read out from the storage medium and stored into the data storage unit 36 of the navigation apparatus 7.

As another method, if the data storage unit 36 is constituted by a removable medium such as a semi-conductor memory or a hard disk, the map data is transferred from the pre-install terminal 102 to the removable medium, which is then given to the user. The user simply attaches the removable medium to his or her navigation apparatus 7, thereby to complete the pre-install of the map data. It is noted that, in this method, the medium on which the map data for pre-install is stored may be delivered to the user by mail or other delivery service, and the user does not have to visit the shop 8 for pre-install process.

Other than the above-mentioned methods, the map data may be transferred to the navigation apparatus 7 by taking advantage of the communication function of the navigation apparatus 7, for example, by wireless communication with pre-install terminal 102 via infrared communication or the like, or by wired data communication with the data transfer line being connected between the pre-install terminal 102 and the navigation apparatus 7.

### [Map Data]

Next, the data structure of the map data will be described. The map data is produced by a unit obtained by dividing a certain geographical region into a plurality of blocks each having a predetermined area. This unit will be hereinafter referred to as "mesh", and a unit of the map data corresponding to one mesh will be referred to as "mesh data". Namely, the map data is an aggregation of mesh data.

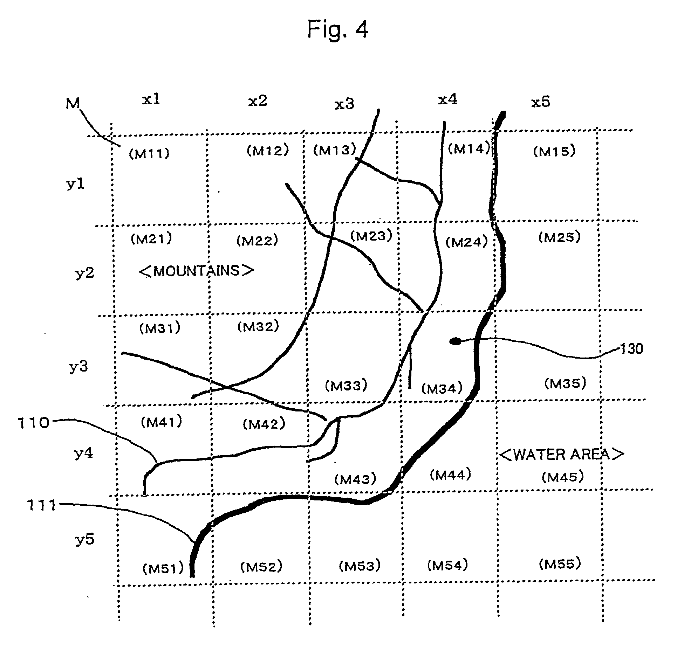

Fig. 4 schematically shows an example, wherein map of a certain region along a shore is divided into a plurality of meshes. In Fig. 4, the line 111 indicates the shoreline, the right side of which is water area (sea) and the left side of which is land. The left and upper area in Fig. 4 is a mountain area, and the lines 110 indicate roads.

As the map data, this region is divided into a plurality of meshes M defined in the form of lattice. In Fig. 4, the identification numbers (M11 to M55) are indicated in the meshes M. The mesh data are prepared for each mesh shown in Fig. 4. The x-coordinate and the y-coordinate correspond to the longitude and the latitude, respectively. The map shown in Fig. 4 has a certain scale, and the mesh data is produced for plural scales. The map of Japan is produced for plural scales, and the map of each scale is divided into the plural meshes to produce the mesh data.

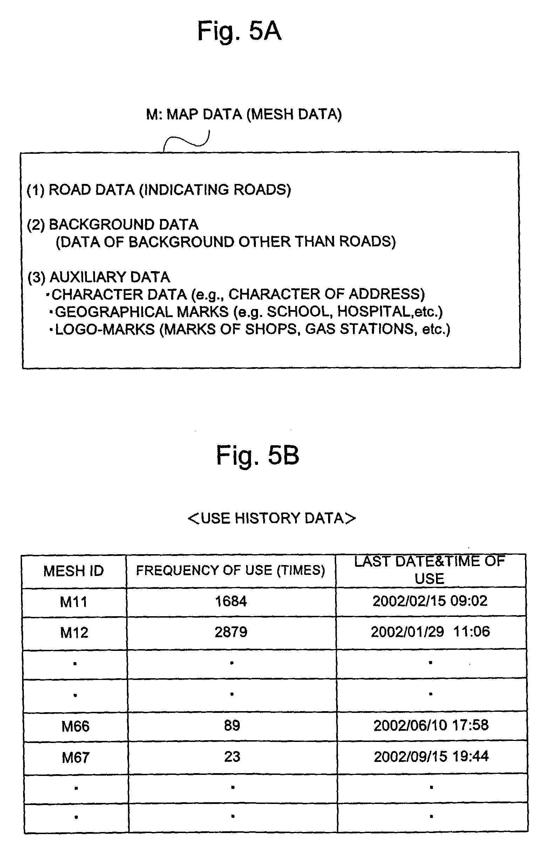

Fig. 5 shows an example of contents of the mesh data. The mesh data roughly includes road data, background data and auxiliary data. The road data is a vector data representing the roads on the map. The background data represents the area, other than the roads, in the region shown as the map data. The navigation apparatus 7 displays map of roads together with the situation around the road. For instance, a picture of a pond is displayed if there is a pond near a road, and the geographical sections are shown on the map in an urban area. These are included in the background data.

The auxiliary data corresponds to the characters, symbols, marks and the like shown within the map, and includes character data, geographical marks and logo-marks. The navigation apparatus 7 displays map with geographical names, addresses, intersection names, station names and the like in the form of characters, and the character data represents those characters. The map may sometimes include map marks such as schools, hospitals, post offices and so on, and these are included in the data representing map marks of facilities. Further, the logo-marks such as marks representing shops, gas stations and so on are included in the auxiliary data.

As described above, the mesh data basically includes the road data, the background data and the auxiliary data. However, there are regions for which those data do not exist. For instance, since the mesh M55 shown in Fig. 4 completely corresponds to the sea, no road, facility and shop exists. Therefore, the mesh data of mesh M55 includes only the background data, and does not include road data and auxiliary data. As the image of displayed map, the mesh M55 is shown as a simple blue area representing the sea, and the background data showing such blue sea area is included in the mesh data M55.

As appreciated, the data amount of each mesh data is different from each other. For example, the mesh data of the meshes M43 and M34 has large data amount because they include many roads intersected and shoreline. On the contrary, the mesh data of the mesh M55 completely corresponding to the sea or the mesh M11 completely corresponding to the mountain area (with no road) has small data amount.

As described above, since the map data is produced as the plural mesh data prepared for plural different mesh data, the map data is downloaded by the unit of the mesh data at the time of pre-install process and at the time when the map data is downloaded as necessary during the driving after the pre-install process. Namely, the pre-install is executed by storing the plural mesh data into the data storage unit 36 of the navigation apparatus 7.

### [Use History Data]

Next, the description will be given of use history data stored in the data storage unit 36 of the navigation apparatus 7. The use history data indicate use history of the map data stored in the data storage unit 36 of the navigation apparatus 7 shown in Fig. 3. In the case of pre-install and also in the case of acquiring map data after the pre-install, the navigation apparatus 7 acquires the map data in the form of mesh data from the map data providing center 6, and stores the data into the data storage unit 36. Therefore, the data storage unit 36 stores a plurality of mesh data. The navigation apparatus 7 stores the use history of each of the mesh data as the use history data for each mesh data.

Fig. 5B shows an example of the use history data. In this example, the use history data is classified by the identification number of the mesh data (hereinafter referred to as "mesh ID") and is stored according to the classification. The use history data include information "Frequency of Use (times)" and information "Last Date and Time of Use". The "Frequency of Use" indicates the frequency of using the mesh data in the past in the form of times, for example. Therefore, mesh data having high Frequency of Use is included in the usual driving area of the user with high possibility, and is important mesh data. The "Last Date and Time of Use" indicates the date and time of the last use of the mesh data. Therefore, for the mesh data of the area in which the user drives relatively frequently, the Last Date and Time of Use is relatively new.

In the present invention, when the storage capacity of the data storage unit 36 is occupied by the map data pre-installed and acquired during the driving after the pre-install, the navigation apparatus 7 erases less important mesh data in the order of importance to create storage area and stores new necessary map data. Specifically, the navigation apparatus 7 refers to the Frequency of Use in the use history data shown in Fig. 5B as an example, and erases the mesh data in the data storage unit 36 from the least important one (e.g., which Frequency of Use is smallest) to create necessary blank storage area. The navigation apparatus 7 may erase the mesh data from the one which Last Date and Time of Use is oldest. The mesh data having oldest Last Date and Time of Use is not used for a long time and is presumed to be less important. Also, the navigation apparatus 7 may determine the mesh data to be erased by using the Frequency of Use and the Last Date and Time of Use in combination. For example, it is possible to erase the mesh data which is included in a predetermined number of mesh data sorted by the Frequency of Use from the smallest one and which Last Date and Time of Use is older than a predetermined time period from the present time.

It is noted that, even if the less important mesh data is erased in this way, when the user drives the area which needs the erased mesh data again, the mesh data is downloaded from the map data providing center 6 and is stored in the data storage unit 36 again.

### [Pre-install Process]

Next, the pre-install process will be described. As mentioned above, the pre-install process is executed at the time of installation of the navigation apparatus, and stores the map data of a predetermined area based on a reference point designated by the user into the data storage unit 36.

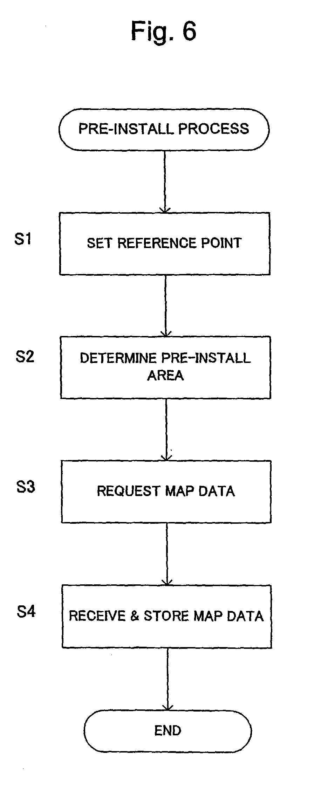

Fig. 6 shows a flowchart of the pre-install process. It is noted that, the following example is based on such a situation that the user who bought the navigation apparatus 7 visits the shop 8, and the shop clerk gets necessary information from the user and operates the pre-install terminal 102 to execute the pre-install process.

The pre-install terminal 102 may be a terminal unit such as a personal computer having a communication function via a communication network 103, and operates as a pre-install terminal by executing a pre-install program. Similarly, the map server 101 executes a pre-install program having the following steps thereby to execute the pre-install process.

First, the shop clerk operates the pre-install terminal 102 to set a reference point designated by the user (step S1). The "reference point" is a place which serves as a reference for determining the range of the map data to be pre-installed. The reference point may be an arbitrary place which the user desires, and the user generally sets the place where he or she frequently drives, e.g., his or her house or place of work, as the reference point. It is noted that, as the method of inputting the reference point, the clerk may input the address designated by the user as the reference point during the execution of the pre-install program, for example.

Then, the pre-install terminal 102 determines the area to be pre-installed (hereinafter referred to as "pre-install area") based on the reference point. As the method of determining the pre-install area, for example, an area within predetermined distance from the reference point may be set as the pre-install area. Alternatively, by inputting a plurality of reference points, such as the house and the place of work, for example, a predetermined range covering those reference points may be set to the pre-install area. It is noted that various methods may be used to determine the pre-install area, and the specific method does not limit the scope of the present invention.

When the pre-install area is thus determined, the pre-install terminal 102 uses the communication network 103 to request the map data corresponding to the pre-install area thus determined (step S3). The map server 101 reads out the requested map data from the map DB 104, and sends it to the pre-install terminal 102 via the communication network 103. The pre-install terminal 102 receives the map data from the map server 101 and stores it in the data storage unit 36 of the navigation apparatus 7 (step S4). Thus, the pre-install process is completed, and the map data within the pre-install area determined based on the reference point designated by the user is stored in the data storage unit 36 of the navigation apparatus 7.

### [Map Display Process]

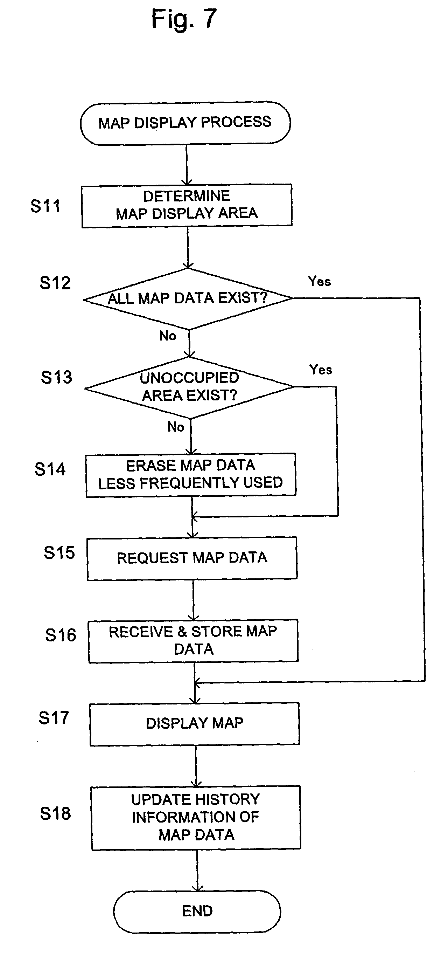

Next, the map display process will be described with reference to Fig. 7. Fig. 7 shows a flowchart of the map display process. It is noted that the map display process is executed after the above-mentioned pre-install process is completed, and specifically achieved by the system controller 20 shown in Fig. 1 executing a program for the map display process.

When the user starts driving the vehicle, the system controller 20 of the navigation apparatus 7 controls the stand-alone navigation device 10 and the GPS receiver 18 to calculate the current position of the vehicle and determines the map display area of a predetermined range including the current position of the vehicle (step S11).

Then, the system controller 20 determines whether or not all map data (i.e., mesh data) corresponding to the map display area determined in step S11 exist in the data storage unit 36 in the navigation apparatus 7 (step S12). If all map data corresponding to the map display area exist in the data storage unit 36 (step S12;Yes), the process goes to the next step S17. On the contrary, if any one of the map data corresponding to the corresponding to the map display area does not exist in the data storage unit 36 (step S12;No), the navigation apparatus 7 needs to connect to the map data providing center 6 thereby to acquire the lacking map data.

Next, the system controller 20 determines whether or not the data storage unit 36 has unoccupied (blank) areas, i.e., area in which new map data can be stored (step S13). If the unoccupied area exists, the newly acquired data can be stored in the unoccupied area, and the process goes to step S15. On the contrary, if no unoccupied area exists, the system controller 20 has to create unoccupied area to store the newly acquired map data. Therefore, the system controller 20 refers to the use history data, which example is shown in Fig. 5B, and erases less important map data such as less frequently used data (step S14).

Then, the process goes to step S15 in which the system controller 20 accesses the map server 101 of the map data providing center 6 to request the lacking map data, acquires the map data from the map server 101 and stores it in the unoccupied area thus created in the data storage unit 36 (step S16).

By this, the map data corresponding to the map display area determined in step S11 are all prepared, and the system controller 20 displays the map of the map display area on the display 44 (step S17). Further, the system controller 20 updates the use history data shown in Fig. 5 for the map data (i.e., mesh data) used for the display in step S17 (step S18). The above process is basically executed every time when the current position of the vehicle is changed.

### [Modification]

In the above example, all map data stored in the data storage unit are equally subject to the comparison in terms of the use history when erasing the map data to create the unoccupied area in the data storage unit. Alternatively, for example, the map data stored in the data storage unit by the pre-install process may be distinguished from the map data acquired during the map display process, i.e., during driving after the pre-install process. The map data stored in the data storage unit by the pre-install process are the map data of the area designated by the user, and is generally the important map data around the user's house or around the work place of the user, or else. Therefore, those pre-installed map data may be excluded from the subject of the erasing in the map display process, or the pre-installed map data may be weighted in determination of the map data to be erased so that such pre-installed map data becomes uneasy to be erased. For example, if the Frequency of Use is the same for one pre-installed map data and one map data other than the pre-installed map data, the pre-installed map data is not erased.

Conversely, erasing the pre-installed map data may be prioritized in a certain situation. For example, a plurality of courses in updating the map data, selectable by the user, may be prepared. Normally, the course is set such that the pre-installed map data is difficult to erase. However, when the user changes the course of updating map data, for example when the user moves the house, erasing the pre-installed map data may be prioritized, so that the map data of the area around the new residence of the user can be smoothly and rapidly collected in the data storage unit 36.

The above embodiments are directed to the case where the present invention is applied to the vehicle navigation apparatus. However, the application of the present invention is not limited to this, and the present invention is applicable to various communication-type navigation apparatus for moving body such as ships, airplanes, and also applicable to a portable navigation apparatus that people carry with themselves.

As described above, according to the present invention, in updating the map data, less important map data are erased with higher priority, and hence the map data may be appropriately updated within the limited storage capacity of the navigation apparatus.

## Claims

1. A navigation apparatus (7) comprising:
a storage unit (36) which stores map data (M) and use history information of the map data;
a detecting unit (20) for detecting whether or not the storage unit has an unoccupied area when new map data is to be stored; and
an erasing unit (20) for erasing the map data in the storage unit to create an unoccupied area based on the use history information when the detecting unit detects that the storage unit does not have the unoccupied area.

2. The navigation apparatus (7) according to claim 1, further comprising:
a communication unit (38) for communicating with a map data providing center (6) to acquire map data when new map data is to be stored; and
a storing unit (36) for storing the acquired map data into the unoccupied area created by the erasing unit.

3. The navigation apparatus (7) according to claim 1, wherein the use history information includes information of frequency of use for each predetermined unit of the map data, and wherein the erasing unit erases the map data which frequency of use is low in an order from the map data having lowest frequency of use.

4. The navigation apparatus (7) according to claim 1, wherein the use history information includes information of last date and time of use for each predetermined unit of the map data, and wherein the erasing unit erases the map data which last date and time of use is old in an order from the map data having oldest last date and time of use.

5. The navigation apparatus (7) according to claim 1, wherein the use history information includes information of frequency of use and information of last date and time of use for each predetermined unit of the map data, and wherein the erasing unit erases the map data which satisfies both of a first condition that the frequency of use is smaller than a predetermined frequency and a second condition that the last date and time of use is older than a predetermined period.

6. The navigation apparatus (7) according to claim 1, wherein the use history information includes information of frequency of use and information of last date and time of use for each predetermined unit of the map data, and wherein the erasing unit erases the map data which satisfies either one of a first condition that the frequency of Use is smaller than a predetermined frequency and a second condition that the last date and time of use is older than a predetermined period.

7. The navigation apparatus (7) according to claim 1, further comprising:
a display unit (44) for displaying map by using the map data corresponding to a map display area; and
an updating unit (20) for updating the use history information for the map data used by the display unit.

8. A computer program executed by a navigation apparatus (7) having a storage unit (36), the program controls the navigation apparatus to function as:
a detecting unit (20) for detecting whether or not the storage unit (36) has an unoccupied area when new map (M) data is to be stored; and
an erasing unit (20) for erasing the map data (M) in the storage unit to create an unoccupied area based on the use history information when the detecting unit detects that the storage unit does not have the unoccupied area.
